# EUROPEAN PATENT APPLICATION

(11) **EP 4 845 203 A1**
(43) Date of publication of application: **25.11.2026**
(21) Application number: 25755170.5
(22) Date of filing: 04.02.2025
(51) Int. Cl.: H04W 24/04, H04W 24/02, H04L 41/0833, H04L 43/08

(54) **METHOD AND DEVICE FOR SUPPORTING NETWORK FUNCTION CONSIDERING ENERGY IN WIRELESS COMMUNICATION SYSTEM**

(30) Priority: 15.02.2024 KR 20240022059
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); LEE, Hoyeon, Suwon-si Gyeonggi-do 16677 (KR); KIM, Dongyeon, Suwon-si Gyeonggi-do 16677 (KR); PARK, Jungshin, Suwon-si Gyeonggi-do 16677 (KR)
(74) Representative: Gulde & Partner
(86) International application number: PCT/KR2025/099249
(87) International publication number: WO 2025/174173

(57) **Abstract**

The disclosure relates to a 5G or 6G communication system for supporting a higher data transmission rate. The method comprises the steps of: transmitting a request message including information about network energy to a network repository function (NRF) entity; and receiving a response message from the NRF entity in response to the request message.

## Description

### [Technical Field]

The disclosure relates to a wireless communication system or a mobile communication system. Specifically, the disclosure relates to a method and a device for supporting a network function considering energy in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure is to provide a method and a device for supporting a network function considering energy in a wireless communication system or a mobile communication system.

### [Solution to Problem]

A control signal processing method in a wireless communication system, according to an embodiment of the disclosure, includes receiving a first control signal transmitted from a base station, processing the received first control signal, generating a second control signal, based on the processing, and transmitting the generated second control signal to the base station.

### [Advantageous Effects of Invention]

Embodiments set forth herein provide a device and a method capable of effectively providing services in a mobile communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates an architecture of a 5G system according to various embodiments of the disclosure.
FIG. 2 illustrates a network function (NF) registration procedure according to various embodiments of the disclosure.
FIG. 3 illustrates an NF update procedure according to various embodiments of the disclosure.
FIG. 4 illustrates an NF discovery procedure according to various embodiments of the disclosure.
FIG. 5 illustrates an NF subscription procedure according to various embodiments of the disclosure.
FIG. 6 illustrates a procedure for user plane function (UPF) selection considering energy-related information and UPF reselection considering energy-related information according to various embodiments of the disclosure.
FIG. 7 illustrates a UPF relocation request procedure according to various embodiments of the disclosure.
FIG. 8 illustrates a structure of a UE according to an embodiment of the disclosure.
FIG. 9 illustrates a structure of a base station according to an embodiment of the disclosure.
FIG. 10 illustrates a structure of a network entity according to an embodiment of the disclosure.

### [Mode for the Invention]

Hereinafter, exemplary embodiments of the disclosure will be described in detail in conjunction with the accompanying drawings. It should be noted that, in the accompanying drawings, the same or like elements are designated by the same or like reference signs, if possible. In addition, a detailed description of known functions or configurations that may make the subject matter of the disclosure unclear will be omitted.

In describing the embodiments in the specification, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

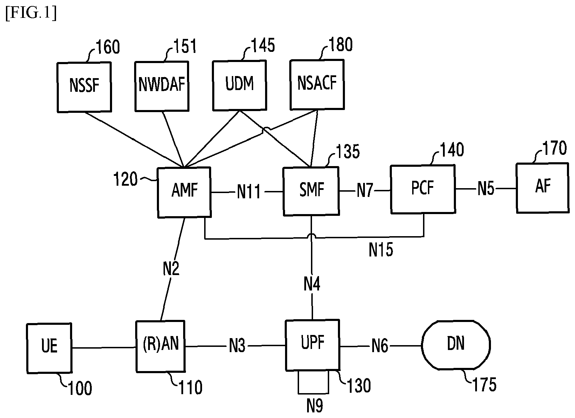

FIG. 1 illustrates an architecture of a 5G system according to various embodiments of the disclosure.

A 5G mobile communication network may include a 5G user equipment (UE) (terminal) 100, a 5G radio access network (RAN) (base station, 5g nodeB (gNB), evolved node B (eNB), etc.) 110, and a 5G core network. The 5G core network may include network functions (NFs), such as an access and mobility management function (AMF) 120 that provides a mobility management function of the UE, a session management function (SMF) 135 that provides a session management function, a user plane function (UPF) 130 that performs a data transfer role, a policy control function (PCF) 140 that provides a policy control function, a unified data management (UDM) 145 that provides a function of managing data, such as subscriber data and policy control data, or a unified data repository (UDR) that stores data of various NFs such as the UDM. The 5G core network may further include NFs, such as a network slice selection function (NSSF) 160, a network data analytic function (NWDAF) 151, an application function (AF) 170, a data network (DN) 175, and a network slice admission control function (NSACF) 180.

In 3GPP systems, conceptual links connecting NFs in the 5G system are defined as "reference points". The following example shows reference points included in a 5G system architecture expressed in FIG. 1.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: a reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the 5G system, network slicing refers to a structure and a technology enabling multiple independent logical networks virtualized in a single physical network. In order to satisfy specialized requirements of a service/application, a network operator provides a service by configuring a virtual end-to-end network referred to as a network slice. In this case, the network slice is distinguished by an identifier referred to as single-network slice selection assistance information (S-NSSAI). The network transmits a set of allowed slices (e.g., allowed NSSAI(s)) to a UE during a UE registration procedure, and the UE transmits and receives application data via a protocol data unit (PDU) session generated via one piece of S-NSSAI (i.e., network slice) in the set of allowed slices. Hereinafter, operations of NFs in embodiments of the disclosure may be understood as operations of orchestration and management (OAM).

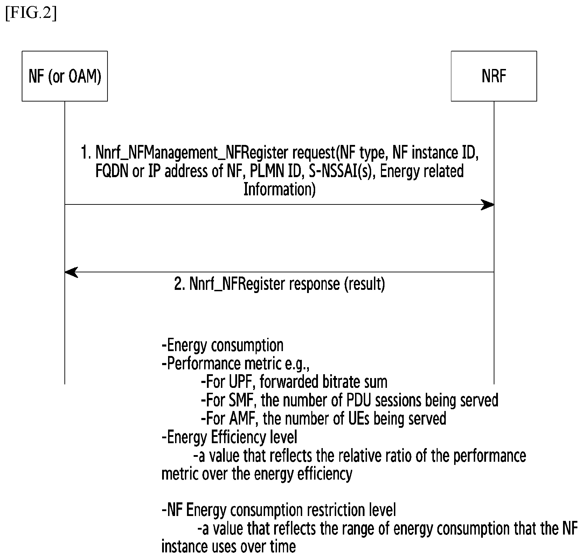

FIG. 2 illustrates an NF registration procedure according to various embodiments of the disclosure.

Referring to FIG. 2, in operation 1, an NF (or OAM) may transmit an NF registration request message to an NRF. The NF registration request message may include at least one of the following pieces of information. However, the disclosure is not limited to the following examples.
- NF type: Information indicating an NF type may be included. For example, the NF type may include an AMF, an SMF, or a UPF.
- NF instance ID: Unique identification information for identifying an NF instance may be included.
- FQDN or IP address of NF: A fully qualified domain name (FQDN) or an Internet protocol (IP) address that is address information about the NF may be included.
- Public land mobile network (PLMN) ID: A PLMN identifier of the NF may be included.

Single network slice selection assistance information(s): Identification information about a network slice(s) that the NF supports (i.e., to which the NF belongs) may be included.
- Energy-related information: Energy-related information about the NF may be included. When the OAM provides the energy-related information about the NF, the information may be transmitted via a message separate from the registration request message of the NF. Alternatively, the energy-related information about the NF may be transmitted together with the registration request message of the NF. The energy-related information about the NF may include one or more of the following pieces of information. However, the disclosure is not limited to the following examples.
- Energy consumption information: For example, the energy consumption information may be energy consumption information about the NF, and may include an energy consumption amount of the NF or an energy consumption amount per unit time. The energy consumption information may include a measured energy consumption amount (e.g., joule or watt) or information for estimating an energy consumption amount (e.g., at least one of a data volume (or bitrate), the number of N4 sessions, or the number of transactions for a UPF, the number of registered UEs or the number of transactions (or the number of transactions per unit time) for an AMF, or the number of PDU sessions or the number of transactions (or the number of transactions per unit time) for an SMF). In addition, the energy consumption information may include at least one of a configured energy consumption amount (e.g., a target or allowable energy consumption amount) or information for estimating a configured energy consumption amount (e.g., information for estimating a target or allowable energy consumption amount) in addition to the measured energy consumption amount or the information for estimating the energy consumption amount. The energy consumption information may be information configured by the OAM.
- Energy efficiency information: The energy efficiency information is information representing performance of the NF in relation to energy consumption thereof, and may indicate, for example, a value of an amount of data (e.g., the number of bits or the number of transactions) processed per unit time divided by an energy consumption amount. In addition, the energy efficiency information may include configured energy efficiency information (e.g., target or allowable energy efficiency information) in addition to the measured energy efficiency information. The energy efficiency information may be information configured by the OAM.
- NF energy consumption restriction level: For an NF of which an energy consumption amount is limited to a specific range, the NF energy consumption restriction level may include information indicating an allowable energy consumption range for the NF. The NF energy consumption restriction level may be information configured by the OAM.

In operation 2, the NRF may transmit, to the NF, a response message to the NF registration request message. Specifically, the NRF may authenticate the registration request message for the NF. The NRF may reject the NF registration request message, based on the energy-related information included in the message in operation 1. For example, when the configured energy consumption amount (e.g., the target or allowable energy consumption amount) is included in the NF registration request message in operation 1 but the NRF determines that the configured energy consumption amount is not appropriate (e.g., determines that the configured energy consumption amount is too high), the NRF may transmit a response message indicating failure or include an adjusted configured energy consumption amount in a response message indicating success. Similarly, when the configured energy efficiency information of the energy efficiency information is included in the message of operation 1 but the value regarding the energy efficiency is determined to be inappropriate (e.g., when the NRF determines that the value regarding the energy efficiency is too low), the NRF may transmit a response message indicating failure or include adjusted configured energy efficiency information in a response message indicating success.

When the NF energy consumption restriction level is included in the message of operation 1 but the NRF determines that a value of the NF energy consumption restriction level is inappropriate, the NRF may transmit a response message indicating failure or include an adjusted NF energy consumption restriction level in a response message indicating success.

The NF may receive, from the NRF, a response message including a registration processing result (e.g., information indicating success or failure). When the response message includes a configured energy consumption amount, configured energy efficiency, and a configured NF energy consumption restriction level, the NF may update each piece of stored information with newly received information. The NF may control an energy consumption amount, energy consumption efficiency, and an energy consumption amount according to an NF energy consumption level.

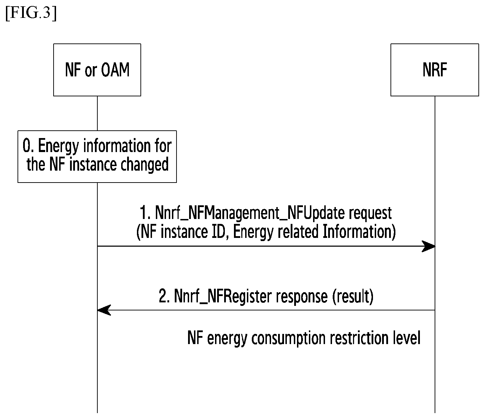

FIG. 3 illustrates an NF update procedure according to various embodiments of the disclosure.

Referring to FIG. 3, in operation 0, an NF may identify whether information regarding energy-related information for an NF instance is changed.

In operation 1, when the information regarding the energy-related information is changed, the NF may transmit an update request message for the changed information to the NRF. The update request message may include information for identifying the NF (e.g., an NF instance ID) and updated energy-related information. The energy-related information included in the update request message transmitted by the NF to the NRF may include at least one of the following pieces of update information. However, the disclosure is not limited to the following examples.
- Energy consumption information: The energy consumption information about the NF may include an energy consumption amount of the NF or an energy consumption amount per unit time. The energy consumption information about the NF may include a measured energy consumption amount (e.g., joule or watt) or information for estimating an energy consumption amount (e.g., at least one of a data volume (or bitrate), the number of N4 sessions, or the number of transactions for a UPF, the number of registered UEs or the number of transactions (or the number of transactions per unit time) for an AMF, or the number of PDU sessions or the number of transactions (or the number of transactions per unit time) for an SMF). Further, the energy consumption information about the NF may include at least one of a configured energy consumption amount (e.g., a target or allowable energy consumption amount) or information for estimating a configured energy consumption amount (e.g., information for estimating a target or allowable energy consumption amount) in addition to the measured energy consumption amount or the information for estimating the energy consumption amount. The energy consumption information about the NF may be information configured by an OAM.
- Energy efficiency information: The energy efficiency information is information representing performance of the NF in relation to energy consumption thereof, and may indicate, for example, a value of an amount of data (e.g., the number of bits or the number of transactions) processed per unit time divided by an energy consumption amount. In addition, the energy efficiency information may include configured energy efficiency information (e.g., target or allowable energy efficiency information) in addition to the measured energy efficiency information. The energy efficiency information may be information configured by the OAM.
- NF energy consumption restriction level: For an NF of which an energy consumption amount is limited to a specific range, information indicating an allowable energy consumption range for the NF may be included. The NF energy consumption restriction level may be information configured by the OAM.

In operation 2, the NF may receive a response message including an update processing result (e.g., information indicating success or failure) for the update from an NRF.

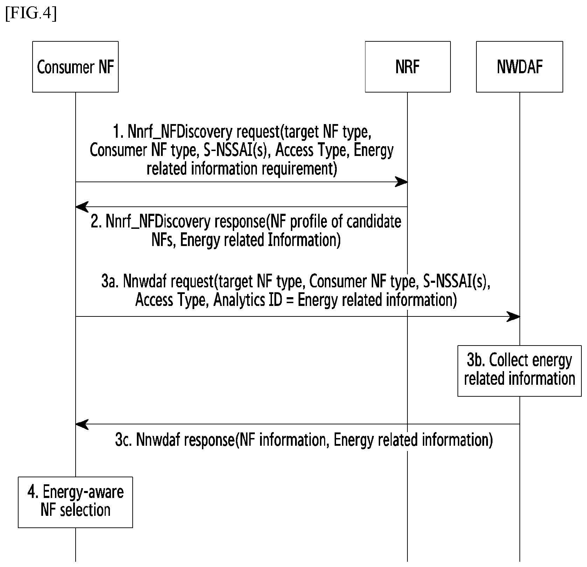

FIG. 4 illustrates an NF discovery procedure according to various embodiments of the disclosure.

Referring to FIG. 4, in operation 1, an NF may transmit an NF discovery request message to an NRF. The NF discovery request message may include at least one of the following pieces of information. However, the disclosure is not limited to the following examples.
- Target NF type: Information indicating a target NF type may be included. For example, the target NF type may be an AMF, an SMF, or a UPF.
- Consumer NF type: Information indicating an NF type of the consumer NF may be included.
- Access Type: An access type (3GPP access or non-3GPP access) may be included.
- RAT Type: When the access type is a 3GPP access, a radio access technology (RAT) type (e.g., NR, E-UTRA, low-Earth-orbit satellite NR, medium-Earth-orbit satellite NR, or NB-IoT) may be included.
- PLMN ID: A PLMN identifier of the NF may be included.
- Energy-related information requirement: Energy-related information (e.g., minimum or maximum (or range)) required for a target NF may be included. The energy-related information requirement information may include at least one of the following pieces of information. However, the disclosure is not limited to the following examples.
- Energy consumption information: The energy consumption information may be required energy consumption information about the NF, and may include an energy consumption amount of the NF or an energy consumption amount per unit time. The energy consumption information may include a minimum value, a maximum value or a range of a required energy consumption amount (e.g., joule or watt), or a minimum value, a maximum value or a range information for estimating a required energy consumption amount (e.g., at least one of a data volume (or bitrate), the number of N4 sessions, or the number of transactions for a UPF, the number of registered UEs or the number of transactions (or the number of transactions per unit time) for an AMF, or the number of PDU sessions or the number of transactions (or the number of transactions per unit time) for an SMF). In addition, the energy consumption information may include a minimum value, a maximum value or a range of a configured energy consumption amount (e.g., a target or allowable energy consumption amount) or include a minimum value, a maximum value or a range of information for estimating a configured energy consumption amount (e.g., information for estimating a target or allowable energy consumption amount), in addition to the measured energy consumption amount or the information for estimating the energy consumption amount.
- Energy efficiency information: Information (e.g., a minimum value, a maximum value, or a range) indicating required performance of the NF in relation to energy consumption thereof may be included. Further, the energy efficiency information may include required configured energy efficiency information (e.g., target or allowable energy efficiency information) in addition to the required energy efficiency information.
- NF energy consumption restriction level: Information indicating a required allowable energy consumption range may be included.

In operation 2, the NRF may transmit, to the consumer NF, a response message to the discovery request message. Specifically, the NRF may identify at least one NF that satisfies the information included in the NF discovery request message, and then transmit an NF profile of the at least one NF satisfying the information included in the NF discovery request message to the consumer NF. The response message may include the NF profile of each NF and energy-related information about each NF. The energy-related information may be included in the NF profile.

Alternatively, even though not receiving the energy-related information requirement in operation 1, the NRF may preferentially include a profile(s) of an NF(s) with low energy efficiency in the response message to improve energy efficiency, or may preferentially include a profile(s) of an NF(s) with low energy consumption in the response message to distribute energy consumption.

In operation 3a, when the energy-related requirement exists but no NF profiles satisfying the energy-related requirement are received in operation 2 (e.g., when the NRF is incapable of processing the energy-related information requirement), the consumer NF may transmit a request message for energy-related information regarding NF instances for the target NF type to an NWDAF. The request message for the energy-related information may include at least one of the target NF type, S-NSSAI(s), the PLMN ID, the access type, an analytics ID, and the energy-related requirement. The analytics ID may be configured to a value indicating analytics regarding energy-related information.

In operation 3b, the NWDAF may perform an operation to collect energy-related information regarding NFs (or NF instances) in response to the request message in operation 3a. The NWDAF may transmit a request for collecting energy-related information regarding NF instances in response to the request message in operation 3a. For example, when the NWDAF receives a request for analysis information regarding energy-related information, the NWDAF may directly request and receive energy consumption amount information from the NF instances in response to the request message in operation 3a. Alternatively, the NWDAF may request and receive information for estimating an energy consumption amount (e.g., including at least one of a data volume (or bitrate), the number of N4 sessions, or the number of transactions for a UPF, the number of registered UEs or the number of transactions (or the number of transactions per unit time) for an AMF, or the number of PDU sessions or the number of transactions (or the number of transactions per unit time) for an SMF) from the NF instances in response to the request message of operation 3a, and may calculate energy consumption amount information regarding the NF, based on the received information.

In operation 3c, when the energy-related information requirement is not included in the request message in operation 3a, the NWDAF may include a target NF type and energy-related information about each NF instance regarding all NF instances corresponding to the information received in operation 3a in the response message. The response message may include at least one of information (e.g., an NF instance ID) for identifying an NF for each of one or more NFs, energy-related information regarding the NF, and energy-related information predicted by the NWDAF for the NF.

In operation 4, when receiving NF profile information (e.g., including at least one of FQDN or IP address information regarding an NF instance) and the energy-related information about each NF instance in operation 2, the consumer NF may select an NF (e.g., select an NF profile), based on the information included in the message of operation 2a. Alternatively, when receiving the NF profile information (e.g., including at least one of the FQDN or IP address information regarding the NF instance) via the message in operation 2 and the energy-related information about each NF instance in operation 3c, the consumer NF may identify energy-related information about each NF instance by combining the two pieces of information. The consumer NF may finally select an NF (e.g., select an NF profile).

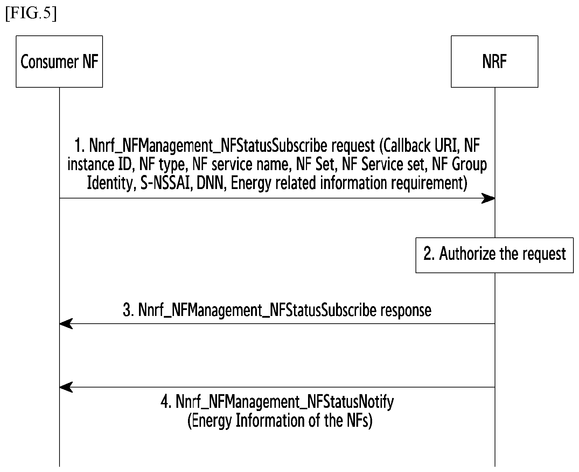

FIG. 5 illustrates an NF subscription procedure according to various embodiments of the disclosure.

Referring to FIG. 5, in operation 1, a consumer NF may transmit a subscription request message regarding information changes of at least one NF (e.g., a new NF satisfying an energy requirement is registered, an NF profile including energy-related information about an NF is changed, or energy-related information about an NF is changed) to an NRF. The NRF may determine target NF instances for subscription. The NRF may transmit a notification message to the consumer NF when state information about the determined NF instances is changed.

The notification message may include at least one of the following pieces of information. However, the disclosure is not limited to the following examples.
- Callback URI: Address information for receiving a notification may be included.
- NF type: An NF type to be notified may be included.
- NF instance ID: An identifier(s) of an NF instance(s) to be notified may be included.
- NF set: Information for identifying an NF set may be included.
- NF group identity: An NF group identifier may be included.
- NF service name: An NF service name may be included
- NF service set: Information for identifying an NF service set may be included.
- S-NSSAI, data network name (DNN): An S-NSSAI and DNN to be notified may be indicated.
- Changes trigger a notification: An attribute to be monitored and notified may be included. Energy-related information may be included.
- Energy-related information notification trigger: Information for a condition for triggering an energy-related information change notification may be included.

It may be requested that a notification be transmitted when an NF instance satisfies or fails to satisfy the following information. However, the disclosure is not limited to the following examples.
- Energy-related information requirement: Energy-related information (e.g., minimum or maximum (or range)) required for a target NF may be included. The energy-related information requirement may include at least one of the following pieces of information. However, the disclosure is not limited to the following examples.
- Energy consumption information: The energy consumption information may be required energy consumption information about the NF, and may include an energy consumption amount of the NF or an energy consumption amount per unit time. The energy consumption information may include a minimum value, a maximum value or a range of a required energy consumption amount (e.g., joule or watt), or include a minimum value, a maximum value or a range information for estimating a required energy consumption amount (e.g., at least one of a data volume (or bitrate), the number of N4 sessions, or the number of transactions for a UPF, the number of registered UEs or the number of transactions (or the number of transactions per unit time) for an AMF, or the number of PDU sessions or the number of transactions (or the number of transactions per unit time) for an SMF). In addition, the energy consumption information may include a minimum value, a maximum value or a range of a configured energy consumption amount (e.g., a target or allowable energy consumption amount), or include a minimum value, a maximum value or a range of information for estimating a configured energy consumption amount (e.g., information for estimating a target or allowable energy consumption amount) in addition to the measured energy consumption amount or the information for estimating the energy consumption amount.
- Energy efficiency information: Information (e.g., a minimum or a maximum (or a range)) indicating required performance of the NF in relation to energy consumption thereof may be included. Further, the energy efficiency information may include required configured energy efficiency information (e.g., target or allowable energy efficiency information) in addition to the required energy efficiency information.
- NF energy consumption restriction level: Information indicating a required allowable energy consumption range may be included.

In operation 2, the NRF may authenticate the request from the consumer NF. The NRF may determine an NF instance(s) or NF service instance(s) about which state information is to be monitored, based on the information included in the message of operation 1. When no NF instance ID is included, state information regarding an NF instance that satisfies the NF type and other parameters (e.g., the S-NSSAI and the DNN) may be monitored. When the energy-related information is included in the "changes trigger a notification" in operation 1 or when monitoring of the energy-related information is activated in configuration information, the NRF may monitor energy-related information regarding the target NF instances.

In operation 3, the NRF may transmit a response message to the subscription to the consumer NF. The response message may include a subscription transaction ID.

In operation 4, when the message of operation 1 is received or when the energy-related information requirement is included in the NF discovery request message of operation 1 in FIG. 4, the NRF may monitor energy-related information regarding an NF instance(s) corresponding to each message. When information included in the energy-related information regarding the NF instance(s) being monitored is changed or when an NF instance corresponding to a target NF instance is newly registered, the NRF may transmit a notification message to the consumer NF. The notification message may include at least one of a subscription correlation ID, NF instance identification information per NF instance regarding the corresponding NF instances, or the energy-related information. When the subscription includes an energy-related information notification trigger (e.g., when an NF has changed in state to fail to satisfy the energy-related information requirement according to the energy-related information notification trigger of the message received in operation 1 (or the NF having failed to satisfy the requirement has succeeded in satisfying the requirement)), the NRF may transmit a message for notifying the aforementioned state to the consumer NF. The notification message may include at least one of a subscription correlation ID, NF instance identification information per NF instance regarding the corresponding NF instances, information indicating that the energy-related requirement is satisfied (or information indicating that the energy-related requirement is not satisfied), or energy-related information.

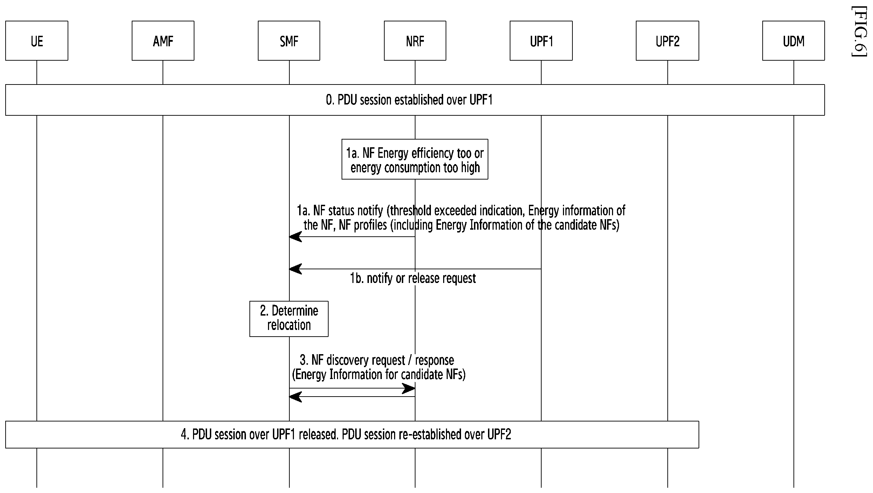

FIG. 6 illustrates a procedure for UPF selection considering energy-related information and UPF reselection considering energy-related information according to various embodiments of the disclosure.

Referring to FIG. 6, in operation 0, a PDU session establishment procedure for a UE may be performed. An SMF may perform UPF selection. In this case, the SMF may transmit an NF discovery request message including an energy-related information requirement (see FIG. 4) and NF type=UPF to an NRF. The SMF may determine whether to include the energy-related information requirement, based on UE subscriber information received from a UDM. For example, when a portion of information corresponding to the energy-related information requirement is included in the UE subscriber information, the SMF may include the information included in the UE subscriber information in the NF discovery message transmitted to the NRF. The SMF may select a UPF (e.g., UPF1) that satisfies an energy-related information requirement and other requirements (e.g., S-NSSAI and DNN) as a serving UPF for a PDU session, based on an NF profile and energy-related information per NF instance with respect to an NF profile(s) (e.g., which may include energy-related information) received from the NRF or one or more NF profiles received from the NRF. The NRF may monitor energy-related information regarding a target UPF(s). When the NF discovery message received from the SMF includes energy-related information (see operation 1 in FIG. 4) or when a subscription request message for requesting a notification of a change in energy-related information regarding the target UPF(s) is received from the SMF (see operation 1 in FIG. 5), the NRF may perform monitoring.

When the NF discovery message received from the SMF includes energy-related information (see operation 1 in FIG. 4) or when a subscription request message for requesting a notification of a change in energy-related information regarding the target UPF(s) is received from the SMF (see operation 1 in FIG. 5), the NRF may perform monitoring.

When newly selected as the serving UPF for the PDU session (e.g., when an N4 session is established), the UPF (or OAM managing the UPF) may monitor energy-related information regarding the UPF (i.e., itself). The remaining PDU session establishment procedure may be performed.

In operation 1a, the NRF may transmit, to the SMF, a message to notify that there is a UPF(s) of which energy-related information has been changed among the target UPF(s) to be monitored or that there is a UPF(s) having changed to fail to satisfy the energy-related information requirement among the target UPF(s) (see operation 4 in FIG. 5).

In operation 1b, the UPF (e.g., UPF1) may transmit, to the SMF, a message to notify that there is a UPF(s) of which energy-related information has been changed among the target UPF(s) to be monitored or that there is a UPF(s) having changed to no longer satisfy the energy-related information requirement among the target UPF(s).

Upon receiving the message in operation 1a or the message in operation 1b, the SMF may determine whether the existing UPF is capable of continuing to serve the PDU session in operation 2.

In operation 3, when determining that the UPF (e.g., UPF1) is no longer able to serve the PDU session (e.g., when the energy-related information requirement is not satisfied), if the message received in operation 1a includes an NF profile(s), the SMF may select a new UPF that satisfies the energy-related information requirement among the included NF profile(s). Alternatively, the SMF may transmit an NF discovery message to the NRF, receive an NF profile(s), and select a new UPF (e.g., UPF2).

In operation 4, a PDU session establishment procedure may be performed through the new UPF (e.g., UPF2). The PDU session via the existing UPF (e.g., UPF1) may be released. The existing PDU session may be released after a new PDU session (e.g., a PDU session through UPF2) is established (e.g., when the existing PDU session is a session corresponding to SSC mode 3), or may be released before the new PDU session is established (e.g., when the existing PDU session is a session corresponding to SSC mode 2).

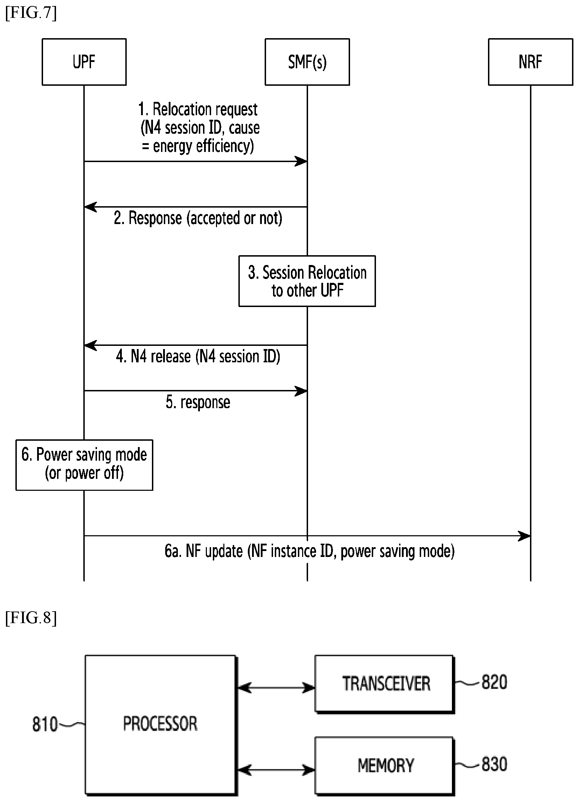

FIG. 7 illustrates a UPF relocation request procedure according to various embodiments of the disclosure.

Referring to FIG. 7, in operation 1, in a case where energy efficiency is lower than a stored threshold, when a notification message indicating a switch to power saving is received from an OAM or according to configuration information, a UPF may transmit an N4 request message including information indicating that the UPF is no longer able to be responsible for a PDU session (or N4 session) to all SMFs connected via an N4 session. The N4 request message may include at least one of an N4 session ID or a cause (e.g., UPF relocation due to energy efficiency).

In operation 2, each SMF may transmit, to the UPF, a response message to the N4 request message.

In operation 3, each SMF may perform a procedure for selecting a different UPF for a PDU session.

In operation 4, each SMF may transmit an N4 release request message including the N4 session ID to the UPF.

In operation 5, the UPF may transmit, to the SMF, a response message to the N4 release request message.

In operation 6, when all N4 sessions are released, the UPF may operate in a power-saving mode (e.g., a low-power mode or a power-off state).

In operation 6a, the UPF may transmit information indicating that the UPF has changed to the power-saving mode to the NRF.

An NRF may not include an NF instance(s) having been changed to the power-saving mode in an NF discovery response message.

FIG. 8 illustrates a structure of a UE according to an embodiment of the disclosure.

Referring to FIG. 8, the UE of the disclosure may include a processor 810, a transceiver 820, and a memory 830. However, components of the UE are not limited to the above-described example. For example, the UE may include a larger or smaller number of components than the above-described components. In addition, the processor 810, the transceiver 820, and the memory 830 may be implemented in the form of a single chip.

According to an embodiment of the disclosure, the processor 810 may control a series of processes in which the UE may operate according to the above-described embodiments of the disclosure. For example, the processor 810 may control the components of the UE to perform the network function support method considering energy according to the above-described embodiments. The processor 810 may control the components of the UE to perform the above-described embodiments of the disclosure by executing the programs stored in the memory 830. In addition, the processor 810 may be an application processor (AP), a communication processor (CP), a circuit, an application -specific circuit, or at least one processor.

According to an embodiment of the disclosure, the transceiver 820 may transmit/receive signals with network entities, other UEs, or base stations. The signals transmitted/received with network entities, other UEs, or base stations may include control information and data. To this end, the transceiver 820 may include an RF transmitter configured to up-convert and amplify the frequency of transmitted signals, an RF receiver configured to low-noise-amplify received signals and down-convert the frequency thereof, and the like. However, this is only an embodiment of the transceiver 820, and the components of the transceiver 820 are not limited to the RF transmitter and the RF receiver. In addition, the transceiver 820 may receive signals through a radio channel, output the same to the processor 810, and transmit signals output from the processor 810 through the radio channel.

According to an embodiment of the disclosure, the memory 830 may store programs and data necessary for the operation of the UE. In addition, the memory 830 may store control information or data included in signals transmitted/received by the UE. The memory 830 may include storage media such as a ROM, a RAM, a hard disk, a CD-ROM, and a DVD, or a combination of storage media. In addition, the memory 830 may include multiple memories. Furthermore, according to an embodiment, the memory 830 may store programs for performing the above-described network function support method considering energy.

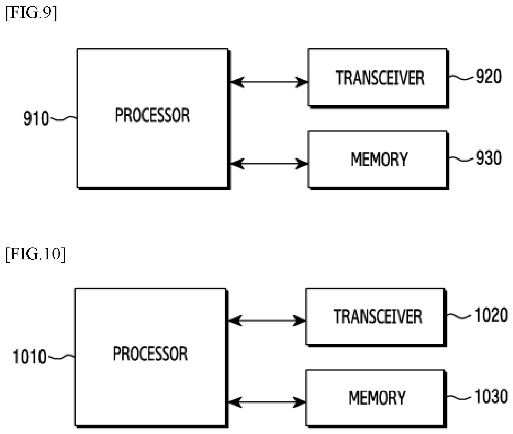

FIG. 9 illustrates a structure of a base station according to an embodiment of the disclosure.

Referring to FIG. 9, the base station of the disclosure may include a processor 910, a transceiver 920, and a memory 930. However, components of the base station are not limited to the above-described example. For example, the base station may include a larger or smaller number of components than the above-described components. In addition, the processor 910, the transceiver 920, and the memory 930 may be implemented in the form of a single chip.

According to an embodiment of the disclosure, the processor 910 may control a series of processes in which the base station may operate according to the above-described embodiments of the disclosure. For example, the processor 910 may control the components of the base station to perform the network function support method considering energy according to the above-described embodiments. The processor 910 may control the components of the base station to perform the above-described embodiments of the disclosure by executing the programs stored in the memory 930. In addition, the processor 910 may be an application processor (AP), a communication processor (CP), a circuit, an application -specific circuit, or at least one processor.

According to an embodiment of the disclosure, the transceiver 920 may transmit/receive signals with network entities, other base stations, or UEs. The signals transmitted/received with network entities, other base stations, or UEs may include control information and data. To this end, the transceiver 920 may include an RF transmitter configured to up-convert and amplify the frequency of transmitted signals, an RF receiver configured to low-noise-amplify received signals and down-convert the frequency thereof, and the like. However, this is only an embodiment of the transceiver 920, and the components of the transceiver 920 are not limited to the RF transmitter and the RF receiver. In addition, the transceiver 920 may receive signals through a radio channel, output the same to the processor 910, and transmit signals output from the processor 910 through the radio channel.

According to an embodiment of the disclosure, the memory 930 may store programs and data necessary for the operation of the base station. In addition, the memory 930 may store control information or data included in signals transmitted/received by the base station. The memory 930 may include storage media such as a ROM, a RAM, a hard disk, a CD-ROM, and a DVD, or a combination of storage media. In addition, the memory 930 may include multiple memories. Furthermore, according to an embodiment, the memory 930 may store programs for performing the above-described network function support method considering energy.

FIG. 10 illustrates a structure of a network entity according to an embodiment of the disclosure.

Referring to FIG. 10, the network entity of the disclosure may include a processor 1010, a transceiver 1020, and a memory 1030. However, components of the network entity are not limited to the above-described example. For example, the network entity may include a larger or smaller number of components than the above-described components. In addition, the processor 1010, the transceiver 1020, and the memory 1030 may be implemented in the form of a single chip. Furthermore, according to an embodiment of the disclosure, the network entity may refer to a network function (NF), and the NF may include an RAN, an AMF, a PCF, a UDM, an AF, an NEF, a UTM, etc.

According to an embodiment of the disclosure, the processor 1010 may control a series of processes in which the NF may operate according to the above-described embodiments of the disclosure. For example, the processor 1010 may control the components of the network entity to perform the network function support method considering energy according to the above-described embodiments. The processor 1010 may control the components of the network entity to perform the above-described embodiments of the disclosure by executing the programs stored in the memory 1030. In addition, the processor 1010 may be an application processor (AP), a communication processor (CP), a circuit, an application -specific circuit, or at least one processor.

According to an embodiment of the disclosure, the transceiver 1020 may transmit/receive signals with other network entities, base stations, or UEs. The signals transmitted/received with other network entities or UEs may include control information and data. To this end, the transceiver 1020 may include an RF transmitter configured to up-convert and amplify the frequency of transmitted signals, an RF receiver configured to low-noise-amplify received signals and down-convert the frequency thereof, and the like. However, this is only an embodiment of the transceiver 1020, and the components of the transceiver 1020 are not limited to the RF transmitter and the RF receiver. In addition, the transceiver 1020 may receive signals through a radio channel, output the same to the processor 1010, and transmit signals output from the processor 1010 through the radio channel.

According to an embodiment of the disclosure, the memory 1030 may store programs and data necessary for the operation of the network entity. In addition, the memory 1030 may store control information or data included in signals transmitted/received by the network entity. The memory 1030 may include storage media such as a ROM, a RAM, a hard disk, a CD-ROM, and a DVD, or a combination of storage media. In addition, the memory 1030 may include multiple memories. Furthermore, according to an embodiment, the memory 1030 may store programs for performing the above-described network function support method considering energy.

It should be noted that the above-described configuration diagrams, illustrative diagrams of control/data signal transmission methods, and illustrative diagrams of operation procedures as illustrated in FIG. 1 to FIG. 10 are not intended to limit the scope of protection of the disclosure. That is, all the constituent elements, entities, or operation steps shown and described in FIG. 1 to FIG. 10 should not be construed as being essential elements for the implementation of the disclosure, and even when including only some of the elements, the disclosure may be implemented without impairing the true of the disclosure.

The above-described operations of the embodiments may be implemented by providing any unit of a device with a memory device storing corresponding program codes. That is, a controller in the device may perform the above-described operations by reading and executing the program codes stored in the memory device by means of a processor or central processing unit (CPU).

Various units or modules of an entity or terminal device set forth herein may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing embodiments of the disclosure.

In the above-described specific embodiments of the present disclosure, elements included in the disclosure have been expressed in singular or plural form according to the specific embodiment presented. However, the singular or plural expressions are selected to be suitable for the situation presented for convenience of description, and the present disclosure is not limited to a single element or a plurality of elements. Even elements expressed in plural form may be configured as a single element, and even elements expressed in singular form may be configured as a plurality of elements.

Although specific embodiments have been described in the detailed description of the present disclosure, various modifications may be made without departing from the scope of the present disclosure. Therefore, the scope of the present disclosure should not be limited to and defined by the described embodiments, but should be defined not only by the claims set forth below, but also by equivalents of the claims.

## Claims

**1.** A method performed by a network entity in a wireless communication system, the method comprising:
transmitting a request message comprising network energy-related information to a network repository function (NRF) entity; and
receiving a response message to the request message from the NRF entity.

**2.** The method of claim 1, wherein the network energy-related information comprises at least one of information regarding energy consumption, information regarding a performance metric, information regarding energy efficiency, or information regarding a network function (NF) energy consumption restriction.

**3.** The method of claim 1, wherein the request message comprises a message for requesting registration of an NF profile of the network entity or a message for requesting update of the NF profile.

**4.** The method of claim 1, wherein, in case that the request message comprises a message for requesting NF discovery, the network energy-related information comprises at least one requirement for energy-related information corresponding to a target NF type, and
wherein the response message comprises energy-related information regarding at least one NF.

**5.** A method performed by a network repository function (NRF) entity in a wireless communication system, the method comprising:
receiving a request message comprising network energy-related information from a network entity; and
transmitting a response message to the request message to the network entity.

**6.** The method of claim 5, wherein the network energy-related information comprises at least one of information regarding energy consumption, information regarding a performance metric, information regarding energy efficiency, or information regarding a network function (NF) energy consumption restriction.

**7.** The method of claim 5, wherein the request message comprises a message for requesting registration of an NF profile of the network entity or a message for requesting update of the NF profile.

**8.** The method of claim 5, wherein, in case that the request message comprises a message for requesting NF discovery, the network energy-related information comprises at least one requirement for energy-related information corresponding to a target NF type, and
wherein the response message comprises energy-related information regarding at least one NF.

**9.** A network entity in a wireless communication system, the network entity comprising:
a transceiver; and
at least one controller connected to the transceiver,
wherein the at least one controller is configured to:
transmit a request message comprising network energy-related information to a network repository function (NRF) entity; and
receive a response message to the request message from the NRF entity.

**10.** The network entity of claim 9, wherein the network energy-related information comprises at least one of information regarding energy consumption, information regarding a performance metric, information regarding energy efficiency, or information regarding a network function (NF) energy consumption restriction.

**11.** The network entity of claim 9, wherein the request message comprises a message for requesting registration of an NF profile of the network entity or a message for requesting update of the NF profile.

**13.** The network entity of claim 9, wherein, in case that the request message comprises a message for requesting NF discovery, the network energy-related information comprises at least one requirement for energy-related information corresponding to a target NF type, and
wherein the response message comprises energy-related information regarding at least one NF.

**13.** A network repository function (NRF) entity in a wireless communication system, the NRF entity comprising:
a transceiver; and
at least one controller connected to the transceiver,
wherein the at least one controller is configured to:
receive a request message comprising network energy-related information from a network entity; and
transmit a response message to the request message to the network entity.

**14.** The NRF entity of claim 13, wherein the network energy-related information comprises at least one of information regarding energy consumption, information regarding a performance metric, information regarding energy efficiency, or information regarding a network function (NF) energy consumption restriction.

**15.** The NRF entity of claim 13, wherein the request message comprises a message for requesting registration of an NF profile of the network entity or a message for requesting update of the NF profile.
